# EUROPEAN PATENT APPLICATION

(11) **EP 3 093 746 A1**
(43) Date of publication of application: **16.11.2016**
(21) Application number: 14863079.1
(22) Date of filing: 30.05.2014
(51) Int. Cl.: G06F 3/0482, G06F 3/0484, G06F 3/0488

(54) **MOBILE TERMINAL AND MOBILE TERMINAL MENU ITEM SETTING METHOD AND DEVICE**

(30) Priority: 07.01.2014 CN 201410007475
(71) Applicant: Huizhou TCL Mobile Communication Co., Ltd., Huizhou, Guangdong 516006 (CN)
(72) Inventor: LIU, Zhe, Huizhou Guangdong 516006 (CN)
(74) Representative: Office Kirkpatrick
(86) International application number: PCT/CN2014/078933
(87) International publication number: WO 2015/103839

(57) **Abstract**

A mobile terminal, and a menu item disposing method and apparatus thereof are provided. The menu item disposing method includes the following steps of: providing a menu operation hotspot at a first predetermined position on a touch screen of the mobile terminal, the menu operation hotspot having a predetermined number of touch regions; receiving an input setting that complies with the left-hand operation habit or the right-hand operation habit from a user; obtaining usage priorities of menu items; and disposing the predetermined number of said menu items on the predetermined number of touch regions in a descending order of the usage priorities, wherein when the input setting complies with the left-hand operation habit, then the menu item having the highest usage priority is disposed on the leftmost touch region of the menu operation hotspot; and when the input setting complies with the right-hand operation habit, then the menu item having the highest usage priority is disposed on the rightmost touch region of the menu operation hotspot. Thereby, the present disclosure makes it convenient for the user to operate the commonly used menu items.

## Description

### FIELD OF THE INVENTION

The present disclosure relates to the technical field of electronics, and more particularly, to a menu item disposing method for a mobile terminal, and also relates to a menu item disposing apparatus for a mobile terminal and the mobile terminal.

### BACKGROUND OF THE INVENTION

Nowadays, mobile terminals play an important role in people's work and entertainment activities, and are widely used for surfing the Internet, network chatting, emailing, playing audios and playing games. Correspondingly, applications loaded in the mobile terminals become increasingly more, and generally, each application corresponds to one menu item, and the application can be operated by clicking on the menu item.

Operating a menu item on a conventional large-screen mobile terminal has the following shortcoming: the user needs to use both hands to operate the mobile terminal, and if only a single hand is used to operate the mobile terminal, then it is difficult to click on menu items at the lower left region or the lower right region of the touch screen if the width of the terminal body exceeds the length of the user's thumb, or it is difficult to click on menu items in the top region of the touch screen if the length of the terminal body exceeds the length of the users' thumb; and if the frame of the screen is narrow, then false operations tend to occur.

### SUMMARY OF THE INVENTION

A technical problem to be solved by the present disclosure is to provide a mobile terminal, and a menu item disposing method and apparatus thereof, which solve the technical problem in the prior art that operating a menu item on a large-screen mobile terminal with a single hand is inconvenient.

To solve the aforesaid technical problem, a technical solution adopted in the present disclosure is as follows: a menu item disposing method for a mobile terminal is provided, and the method comprises the following steps of: providing a menu operation hotspot at a first predetermined position or a second predetermined position adjacent to the first predetermined position on a touch screen of the mobile terminal, the menu operation hotspot having a predetermined number of touch regions; receiving an input setting that complies with the left-hand operation habit or the right-hand operation habit from a user; obtaining usage priorities determined by usage frequencies of menu items within a predetermined time period; and disposing the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot and the menu item having the lowest usage priority is disposed on the rightmost touch region of the menu operation hotspot; and if the input setting complies with the right-hand operation habit, then the menu item having the highest usage priority is disposed on the rightmost touch region of the menu operation hotspot and the menu item having the lowest usage priority is disposed on the leftmost touch region of the menu operation hotspot.

Preferably, the disposing method further comprises the following steps of: dragging a first menu item of the predetermined number of menu items in response to a dragging operation of the user on the first menu item; and when the first menu item is at least partly overlapped with a second menu item of the predetermined number of menu items and the user stops the dragging operation, swapping the positions of the first menu item and the second menu item on the predetermined number of touch regions.

To solve the aforesaid technical problem, another technical solution adopted in the present disclosure is as follows: a menu item disposing method for a mobile terminal is provided, and the disposing method comprises the following steps of: providing a menu operation hotspot at a first predetermined position on a touch screen of the mobile terminal, the menu operation hotspot having a predetermined number of touch regions; receiving an input setting that complies with the left-hand operation habit or the right-hand operation habit from a user; obtaining usage priorities of menu items; and disposing the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot; and if the input setting complies with the right-hand operation habit, then the menu item having the highest usage priority is disposed on the rightmost touch region of the menu operation hotspot.

Preferably, a menu operation dead zone is provided at a second predetermined position adjacent to the first predetermined position to prevent false operations of the user.

Preferably, the disposing method further comprises the following steps of: if the input setting complies with the left-hand operation habit, then the menu item having the lowest usage priority of the predetermined number of menu items is disposed on the rightmost touch region of the menu operation hotspot; and if the input setting complies with the right-hand operation habit, then the menu item having the lowest usage priority of the predetermined number of menu items is disposed on the leftmost touch region of the menu operation hotspot.

Preferably, the usage priorities, are determined by usage frequencies of the menu items within a predetermined time period.

Preferably, the disposing method further comprises the following steps of: dragging a first menu item of the predetermined number of menu items in response to a dragging operation of the user on the first menu item; and when the first menu item is at least partly overlapped with a second menu item of the predetermined number of menu items and the user stops the dragging operation, swapping the positions of the first menu item and the second menu item on the predetermined number of touch regions.

To solve the aforesaid technical problem, another technical solution adopted in the present disclosure is as follows: a menu item disposing apparatus for a mobile terminal is provided, and the disposing apparatus comprises a touch management module, an input module, and a menu management module. The touch management module is configured to provide a menu operation hotspot at a first predetermined position on a touch screen of the mobile terminal, and the menu operation hotspot has a predetermined number of touch regions; the input module is configured to receive an input setting that complies with the left-hand operation habit or the right-hand operation habit from a user; a priority obtaining module is configured to obtain usage priorities of menu items; and the menu management module is configured to dispose the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot; and if the input setting complies with the right-hand operation habit, then the menu item having the highest usage priority is disposed on the rightmost touch region of the menu operation hotspot.

Preferably, the touch management module is further configured to provide a menu operation dead zone at a second predetermined position adjacent to the first predetermined position to prevent false operations of the user.

Preferably, the menu management module is configured to: if the input setting complies with the left-hand operation habit, dispose the menu item having the lowest usage priority of the predetermined number of menu items on the rightmost touch region of the menu operation hotspot, and if the input setting complies with the right-hand operation habit, dispose the menu item having the lowest usage priority of the predetermined number of menu items on the leftmost touch region of the menu operation hotspot.

Preferably, the disposing apparatus further comprises a touch responding module; the touch management module is further configured to drag a first menu item of the predetermined number of menu items in response to a dragging operation of the user on the first menu item; and the touch responding module is configured to, when the first menu item is at least partly overlapped with a second menu item of the predetermined number of menu items and the user stops the dragging operation, swap the positions of the first menu item and the second menu item on the predetermined number of touch regions.

To solve the aforesaid technical problem, another technical solution adopted in the present disclosure is as follows: a mobile terminal is provided, and the mobile terminal comprises any of the aforesaid disposing apparatuses.

The present disclosure has the following benefits: the mobile terminal, and the menu item disposing method and apparatus thereof according to the present disclosure allow a user to conveniently operate the commonly used menu items by disposing the menu items having high usage priority in the menu operation hotspot, and arranging the menu items in the menu operation hotspot according to the single-hand operation habit of the user; where if the user is left-handed, then the menu item having the highest usage priority is disposed on the leftmost side of the menu operation hotspot; and if the user is right-handed, then the menu item having the highest usage priority is disposed on the rightmost side of the menu operation hotspot.

### BRIEF DESCRIPTION OF THE DRAWINGS

To describe the technical solutions of embodiments of the present disclosure more clearly, the attached drawings necessary for description of the embodiments will be introduced briefly hereinbelow. Obviously, these attached drawings only illustrate some of the embodiments of the present disclosure, and those of ordinary skill in the art can further obtain other attached drawings according to these attached drawings without making inventive efforts. In the attached drawings:
FIG. 1 is a schematic flowchart diagram of a menu item disposing method for a mobile terminal according to an embodiment of the present disclosure.
FIG. 2 is a schematic flowchart diagram of a menu item disposing method for a mobile terminal according to another embodiment of the present disclosure.

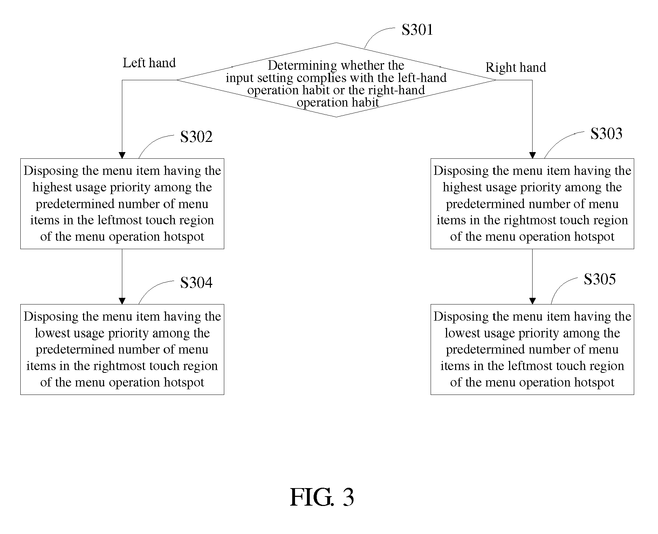

FIG. 3 is a schematic flowchart diagram of disposing menu items in the menu operation hotspot in the menu item disposing method for a mobile terminal according to the present disclosure.
FIG. 4 is a schematic flowchart diagram of a menu item disposing method for a mobile terminal according to yet another embodiment of the present disclosure.
FIG. 5 is a schematic view of an application scenario of the menu item disposing method for a mobile terminal according to the present disclosure.
FIG. 6 is a schematic view of another application scenario of the menu item disposing method for a mobile terminal according to the present disclosure.
FIG. 7 is a schematic view of yet another application scenario of the menu item disposing method for a mobile terminal according to the present disclosure.
FIG. 8 is a schematic structural view of a menu item disposing apparatus for a mobile terminal according to an embodiment of the present disclosure.
FIG. 9 is a schematic structural view of a menu item disposing apparatus for a mobile terminal according to another embodiment of the present disclosure.

### DETAILED DESCRIPTION OF THE INVENTION

Hereinbelow, in order to achieve a thorough understanding of this application, specific details such as specific system structures, interfaces and technologies are provided for purpose of description rather than to limit this application. However, those skilled in the art shall be appreciated that, this application may also be achieved in other embodiments without these specific details. In other cases, detailed descriptions of well-known apparatuses, circuits and methods are omitted in order to prevent the description of this application from being obscured by unnecessary details.

Hereinafter, the present disclosure will be described with reference to the attached drawings and embodiments.

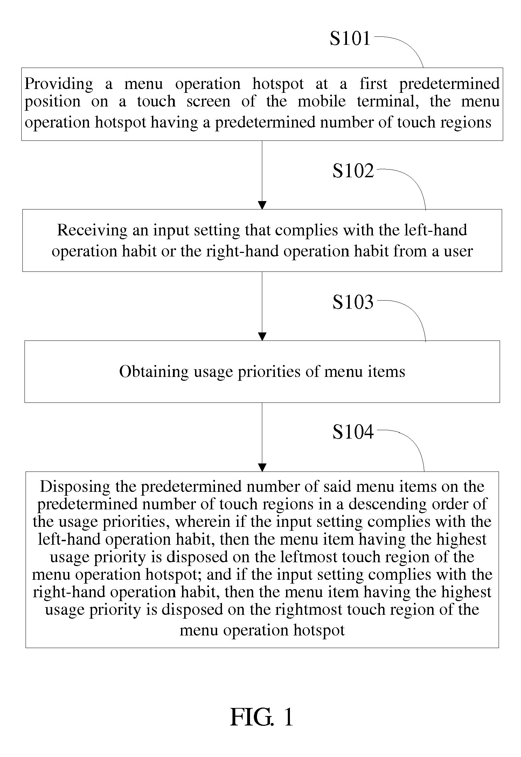

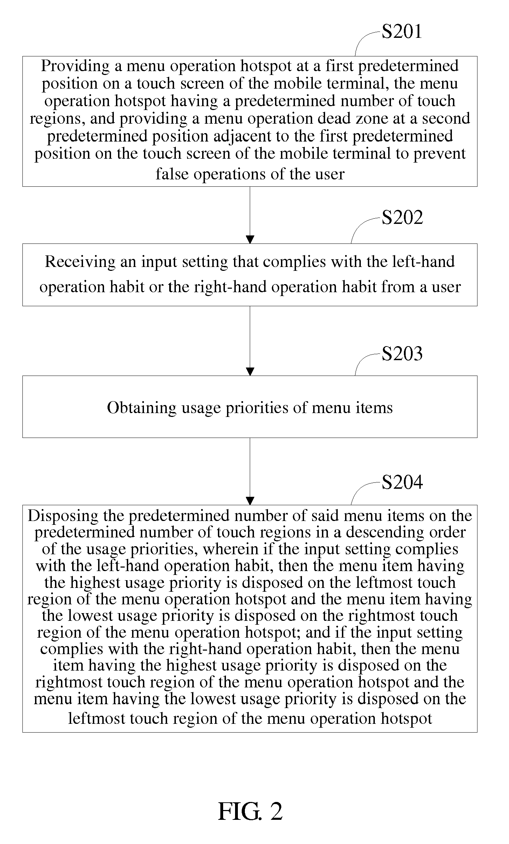

Referring to FIG. 1, FIG. 1 is a schematic flowchart diagram of a menu item disposing method for a mobile terminal according to an embodiment of the present disclosure. As shown in FIG. 1, the flowchart comprises the following steps:
S101: providing a menu operation hotspot at a first predetermined position on a touch screen of the mobile terminal, the menu operation hotspot having a predetermined number of touch regions.
   The menu operation hotspot is disposed in an area that can be operated most conveniently by the user, e.g., a middle position at the bottom of the touch screen of the mobile terminal. Each touch region may have one menu item disposed thereon, and the touch region may be a rectangle or a circle. When a menu item is disposed on the touch region, an application corresponding to the menu item can be activated by clicking on coordinates of any point in the touch region. The predetermined number of the touch regions may be one, two, or more depending on the size of the touch screen of the mobile terminal and requirements of the user. For example, the user can input a value through a textbox or select a value through a listbox, or the mobile terminal can determine the value according to a default setting.
S102: receiving an input setting that complies with the left-hand operation habit or the right-hand operation habit from a user.
   The user can input the dominant-hand operation habit through a textbox or by selecting buttons to select the left-hand operation habit or the right-hand operation habit. Optionally, the dominant-hand operation habit is the right-hand operation habit by default.
S103: obtaining usage priorities of menu items.
   In this embodiment, the usage priorities may be determined by usage frequencies of menu items within a predetermined time period. The higher the usage frequency is, the higher the usage priority will be; and on the contrary, the lower the usage frequency is, the lower the usage priority will be. In other embodiments, the usage priorities may be determined in other ways.
S104: disposing the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot; and if the input setting complies with the right-hand operation habit, then the menu item having the highest usage priority is disposed on the rightmost touch region of the menu operation hotspot.
   By arranging the predetermined number of menu items, the left-handed or right-handed user can operate the most commonly used menu items very conveniently, which can improve the user's experience of operating the large-screen mobile terminal.
   Referring to FIG. 2, FIG. 2 is a schematic flowchart diagram of a menu item disposing method for a mobile terminal according to another embodiment of the present disclosure. The technical features and technical effects of steps S202 and S203 in this embodiment are the same as those of the steps S102 and S103 in the aforesaid embodiment, and thus will not be further described herein. This embodiment differs from the aforesaid embodiment in that:
Step S201: providing a menu operation hotspot at a first predetermined position on a touch screen of the mobile terminal, the menu operation hotspot having a predetermined number of touch regions, and providing a menu operation dead zone at a second predetermined position adjacent to the first predetermined position on the touch screen of the mobile terminal to prevent false operations of the user.
   The second predetermined position may be disposed at either side of the first predetermined position and next to the frame of the screen. The menu operation dead zone has no menu item disposed therein, and does not respond to any touch operation of the user either. In this way, under circumstances where the frame of the screen of the mobile terminal is relatively thin, false operations of the user on menu items that would have been disposed in the menu operation dead zone can be avoided.
Step S204: disposing the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot and the menu item having the lowest usage priority is disposed on the rightmost touch region of the menu operation hotspot; and if the input setting complies with the right-hand operation habit, then the menu item having the highest usage priority is disposed on the rightmost touch region of the menu operation hotspot and the menu item having the lowest usage priority is disposed on the leftmost touch region of the menu operation hotspot.

If the dominant hand of the user is the left hand, then the menu item having the highest usage priority is disposed on the leftmost side of the menu operation hotspot and additionally, the menu item having the lowest usage priority is disposed on the rightmost side of the menu operation hotspot; and if the dominant hand of the user is the right hand, then the menu item having the highest usage priority is disposed on the rightmost side of the menu operation hotspot and additionally, the menu item having the lowest usage priority is disposed on the leftmost side of the menu operation hotspot.

Specifically, referring to FIG, 3, the step S204 specifically comprises the following steps:
Step S301: determining whether the input setting complies with the left-hand operation habit or the right-hand operation habit, executing step S302 if it complies with the left-hand operation habit, and executing step S303 if it complies with the right-hand operation habit.
Step S302: disposing the menu item having the highest usage priority among the predetermined number of menu items in the leftmost touch region of the menu operation hotspot.
Step S303: disposing the menu item having the highest usage priority among the predetermined number of menu items in the rightmost touch region of the menu operation hotspot.
Step S304: disposing the menu item having the lowest usage priority among the predetermined number of menu items in the rightmost touch region of the menu operation hotspot.
Step S305: disposing the menu item having the lowest usage priority among the predetermined number of menu items in the leftmost touch region of the menu operation hotspot.

There may be a situation where there are multiple menu items having the lowest usage priority, but due to the limitation of the predetermined number, it is impossible to put all the qualified menu items into the menu operation hotspot. Optionally in such a situation, a pull-down menu item may be disposed in the touch region corresponding to the menu items having the lowest usage priority in the menu operation hotspot, and all the menu items having the lowest usage priority are included in this pull-down menu item.

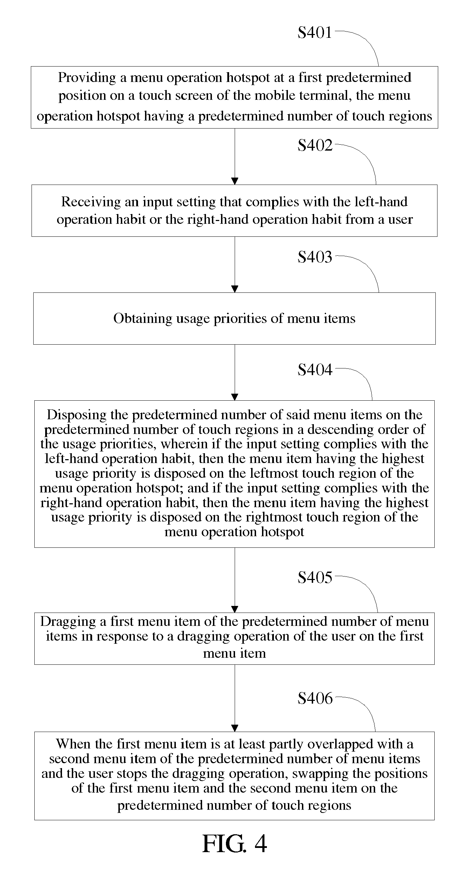

Referring to FIG. 4, FIG. 4 is a schematic flowchart diagram of a menu item disposing method for a mobile terminal according to yet another embodiment of the present disclosure. The technical features and technical effects of steps S401∼S404 in this embodiment are the same as those of the steps S101∼S104 in the aforesaid embodiment, and thus will not be further described herein. This embodiment differs from the aforesaid embodiment in that:
Step S405: dragging a first menu item of the predetermined number of menu items in response to a dragging operation of the user on the first menu item.
   The first menu item is any of the predetermined number of menu items in the menu operation hotspot, and the user can long-press and drag the touch region that has the first menu item disposed thereon so that the first menu item is dragged in the mobile terminal in response to the dragging operation of the user.
Step S406: when the first menu item is at least partly overlapped with a second menu item of the predetermined number of menu items and the user stops the dragging operation, swapping the positions of the first menu item and the second menu item on the predetermined number of touch regions.

The second menu item is any of the predetermined number of menu items in the menu operation hotspot other than the first menu item.

The disposing method of this embodiment allows the user to manually swap the positions of any two menu items after the menu items have been arranged in the menu operation hotspot, which can further improve the user experience.

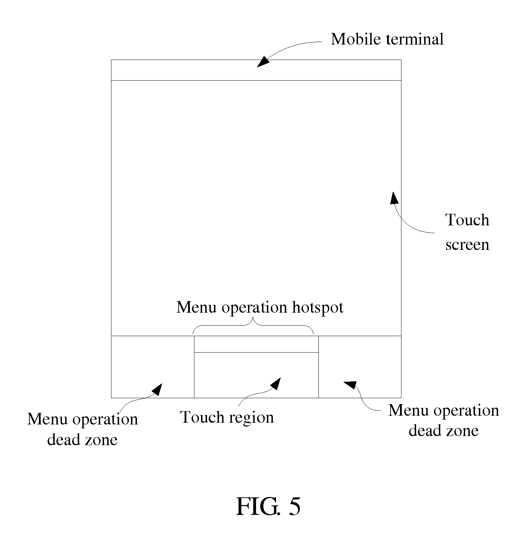

Referring to FIGs. 5∼7 together, FIGs. 5∼7 are schematic views of three application scenarios of the menu item disposing method for a mobile terminal according to the present disclosure. The lower region of the screen of the mobile terminal comprises a menu operation hotspot and a menu operation dead zone. There is no limitation on the number of the touch regions in the menu operation hotspot. The menu operation dead zone is disposed at either side of the menu operation hotspot, and no menu item is disposed in the menu operation dead zone.

As shown in FIG. 5, there is only one touch region in the menu operation hotspot, and undoubtedly, a menu item A having the highest usage priority in this mobile terminal is disposed in this touch region.

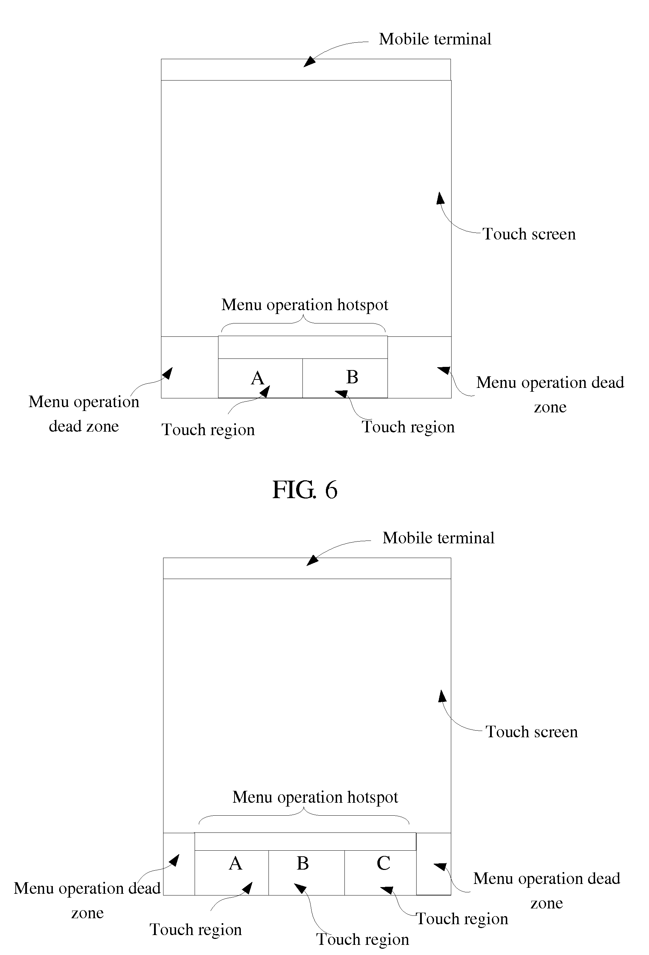

As shown in FIG. 6, there are two touch regions in the menu operation hotspot, and menu items A and B are disposed in these two touch regions respectively, where it is assumed that the usage priority of the menu item A is higher than the usage priority of the menu item B. If the user has the left-hand operation habit, then the menu item A is on the left of the menu item B; and on the contrary, if the user has the right-hand operation habit, then the menu item A should be on the right of the menu item B.

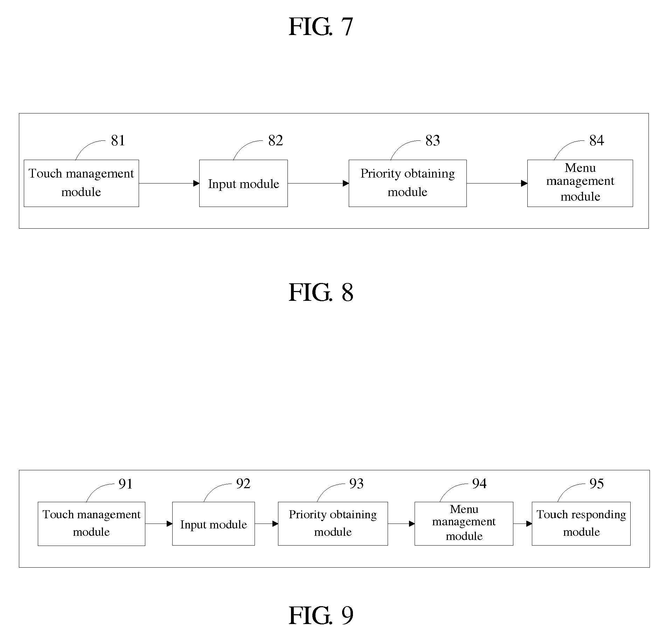

As shown in FIG. 7, there are three touch regions in the menu operation hotspot, and menu items A, B and C are disposed in these three touch regions respectively, where it is assumed that the usage priority of the menu item A is higher than the usage priority of the menu item B, and the usage priority of the menu item B is higher than the usage priority of the menu item C. If the user has the left-hand operation habit, then the menu item A is on the left of the menu item B and the menu item C is on the right of the menu item B; and on the contrary, if the user has the right-hand operation habit, then the menu item A should be on the right of the menu item B and the menu item C should be on the left of the menu item B. It shall be understood that, when there are four or even more touch regions in the menu operation hotspot, the menu items can still be arranged in the aforesaid way and this will not be further described herein.

In the disposing methods of the aforesaid embodiments, the menu items having high usage priorities are disposed in the menu operation hotspot on the touch screen of the mobile terminal so that the user can conveniently operate the commonly used menu items. Further, sequences of the menu items arranged in the menu operation hotspot are set according to the single-hand operation habit of the user, and this makes the operation more convenient for the user. Moreover, a menu operation dead zone may be provided on the touch screen of the mobile terminal to prevent false operations of the user.

In some embodiments, triggering conditions may be set for the aforesaid application scenarios. For example, a fixed time point (e.g., every Sunday at 10 pm) may be set in the mobile terminal to execute the process regularly; or a warning module may be disposed in the mobile terminal to count the usage frequencies of the menu items, and when the usage frequency of a certain menu item exceeds a preset threshold, the process is activated; or other ways may be adopted and no limitation is made thereto.

Referring to FIG. 8, FIG. 8 is a schematic structural view of a menu item disposing apparatus for a mobile terminal according to an embodiment of the present disclosure. As shown in FIG. 8, the menu item disposing apparatus for a mobile terminal of the present disclosure comprises a touch management module 81, an input module 82, a priority obtaining module 83 and a menu management module 84.

The touch management module 81 is configured to provide a menu operation hotspot at a first predetermined position on a touch screen of the mobile terminal, and the menu operation hotspot has a predetermined number of touch regions. The menu operation hotspot is disposed in an area that can be operated most conveniently by the user, e.g., a middle position at the bottom of the touch screen of the mobile terminal. Each touch region may have one menu item disposed thereon, and the touch region may be a rectangle or a circle. When a menu item is disposed on the touch region, an application corresponding to the menu item can be activated by clicking on coordinates of any point in the touch region. The predetermined number of the touch regions may be one, two, or more depending on the size of the touch screen of the mobile terminal and requirements of the user. For example, the user can input a value through a textbox or select a value through a listbox, or the mobile terminal can determine the value according to a default setting.

The input module 82 is configured to receive an input setting that complies with the left-hand operation habit or the right-hand operation habit from a user. The user can input the dominant-hand operation habit through a textbox or by selecting buttons to select the left-hand operation habit or the right-hand operation habit. Optionally, the dominant-hand operation habit is the right-hand operation habit by default.

The priority obtaining module 83 is configured to obtain usage priorities of menu items. In this embodiment, the usage priorities may be determined by usage frequencies of menu items within a predetermined time period. The higher the usage frequency is, the higher the usage priority will be; and on the contrary, the lower the usage frequency is, the lower the usage priority will be. In other embodiments, the usage priorities may be determined in other ways.

The menu management module 84 is configured to dispose the predetermined number of said menu items on the predetermined number of touch regions in a descending order of the usage priorities, wherein if the input setting complies with the left-hand operation habit, then the menu item having the highest usage priority is disposed on the leftmost touch region of the menu operation hotspot; and if the input setting complies with the right-hand operation habit, then the menu item having the highest usage priority is disposed on the rightmost touch region of the menu operation hotspot.

By arranging the predetermined number of menu items, the left-handed or right-handed user can operate the most commonly used menu items very conveniently, which can improve the user's experience of operating the large-screen mobile terminal.

Optionally, the touch management module 81 is further configured to provide a menu operation dead zone at a second predetermined position adjacent to the first predetermined position to prevent false operations of the user. The second predetermined position may be disposed at either side of the first predetermined position and next to the frame of the screen. The menu operation dead zone has no menu item disposed therein, and does not respond to any touch operation of the user either. In this way, under circumstances where the frame of the screen of the mobile terminal is relatively thin, false operations of the user on menu items that would have been disposed in the menu operation dead zone can be avoided.

Optionally, the menu management module 84 is configured to: if the input setting complies with the left-hand operation habit, dispose the menu item having the lowest usage priority of the predetermined number of menu items on the rightmost touch region of the menu operation hotspot, and if the input setting complies with the right-hand operation habit, dispose the menu item having the lowest usage priority of the predetermined number of menu items on the leftmost touch region of the menu operation hotspot.

There may be a situation where there are multiple menu items having the lowest usage priority, but due to the limitation of the predetermined number, it is impossible to put all the qualified menu items into the menu operation hotspot. Optionally in such a situation, a pull-down menu item may be disposed in the touch region corresponding to the menu items having the lowest usage priority in the menu operation hotspot, and all the menu items having the lowest usage priority are included in this pull-down menu item.

Referring to FIG. 9, FIG. 9 is a schematic structural view of a menu item disposing apparatus for a mobile terminal according to another embodiment of the present disclosure. The disposing apparatus comprises a touch management module 91, an input module 92, a priority obtaining module 93, a menu management module 84 and a touch responding module 95. The technical features and technical effects of the input module 92, the priority obtaining module 93 and the menu management module 94 in this embodiment are the same as those of the input module 82, the priority obtaining module 83 and the menu management module 84 in the aforesaid embodiment, and thus will not be further described herein. This embodiment differs from the previous embodiment in that:
The touch management module 91 is further configured to drag a first menu item of the predetermined number of menu items in response to a dragging operation of the user on the first menu item. The first menu item is any of the predetermined number of menu items in the menu operation hotspot, and the user can long-press and drag the touch region that has the first menu item disposed thereon so that the first menu item is dragged in the mobile terminal in response to the dragging operation of the user.

The touch responding module 95 is configured to, when the first menu item is at least partly overlapped with a second menu item of the predetermined number of menu items and the user stops the dragging operation, swap the positions of the first menu item and the second menu item on the predetermined number of touch regions. The second menu item is any of the predetermined number of menu items in the menu operation hotspot other than the first menu item.

The disposing apparatus of this embodiment allows the user to manually swap the positions of any two menu items in the menu operation hotspot, which can further improve the user experience and increase the entertainment effect in using the mobile terminal.

In the disposing apparatuses of the aforesaid embodiments, the menu items having high usage priorities are disposed in the menu operation hotspot on the touch screen of the mobile terminal so that the user can conveniently operate the commonly used menu items. Further, sequences of the menu items arranged in the menu operation hotspot are set according to the single-hand operation habit of the user, and this makes the operation more convenient for the user. Moreover, a menu operation dead zone may be provided on the touch screen of the mobile terminal to prevent false operations of the user.

In some embodiments, triggering conditions may be set for the aforesaid disposing apparatus. For example, a fixed time point (e.g., every Sunday at 10 pm) may be set in the mobile terminal to activate the apparatus regularly; or a warning module may be disposed in the mobile terminal to count the usage frequencies of the menu items, and when the usage frequency of a certain menu item exceeds a preset threshold, the apparatus is activated; or other ways may be adopted and no limitation is made thereto.

An embodiment of the present disclosure further provides a mobile terminal, which comprises the menu item disposing apparatus of the aforesaid embodiments. Please refer to the prior art for other structures of the mobile terminal, and these structures can be readily appreciated by those skilled in the art and thus will not be further described herein.

According to the above descriptions, the mobile terminal, and the menu item disposing method and apparatus thereof according to the present disclosure allow the user to conveniently operate the commonly used menu items by disposing the menu items having high usage priorities in the menu operation hotspot, and arranging the menu items in the menu operation hotspot according to the single-hand operation habit of the user. Further, a menu operation dead zone is provided to prevent false operations of the user. Additionally, the present disclosure allows the user to manually swap positions of any two menu items in the menu operation hotspot so as to improve user experience.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A menu item disposing method for a mobile terminal, comprising the
following steps of:
providing a menu operation hotspot at a first predetermined position or a second predetermined position adjacent to the first predetermined position on a touch screen of the mobile terminal, the menu operation hotspot having a predetermined number of touch regions;
receiving an input setting that complies with the left-hand operation habit or the right-hand operation habit from a user;
obtaining usage priorities determined by usage frequencies of menu items within a predetermined time period; and
disposing the predetermined number of the menu items on the predetermined number of touch regions in a descending order of the usage priorities, wherein when the input setting complies with the left-hand operation habit, then the menu item having the highest usage priority is disposed on the leftmost touch region of the menu operation hotspot and the menu item having the lowest usage priority is disposed on the rightmost touch region of the menu operation hotspot; and when the input setting complies with the right-hand operation habit, then the menu item having the highest usage priority is disposed on the rightmost touch region of the menu operation hotspot and the menu item having the lowest usage priority is disposed on the leftmost touch region of the menu operation hotspot.

2. The disposing method of claim 1, further comprising the following steps of:
dragging a first menu item of the predetermined number of menu items in response to a dragging operation of the user on the first menu item; and
when the first menu item is at least partly overlapped with a second menu item of the predetermined number of menu items and the user stops the dragging operation, swapping the positions of the first menu item and the second menu item on the predetermined number of touch regions.

3. A menu item disposing method for a mobile terminal, comprising the following steps of:
providing a menu operation hotspot at a first predetermined position on a touch screen of the mobile terminal, the menu operation hotspot having a predetermined number of touch regions;
receiving an input setting that complies with the left-hand operation habit or the right-hand operation habit from a user;
obtaining usage priorities of menu items; and
disposing the predetermined number of said menu items on the predetermined number of touch regions in a descending order of the usage priorities, wherein whenthe input setting complies with the left-hand operation habit, then the menu item having the highest usage priority is disposed on the leftmost touch region of the menu operation hotspot; and whenthe input setting complies with the right-hand operation habit, then the menu item having the highest usage priority is disposed on the rightmost touch region of the menu operation hotspot.

4. The disposing method of claim 3, wherein a menu operation dead zone is provided at a second predetermined position adjacent to the first predetermined position to prevent false operations of the user.

5. The disposing method of claim 3 or 4, further comprising the following steps of:
whenthe input setting complies with the left-hand operation habit, then the menu item having the lowest usage priority of the predetermined number of menu items is disposed on the rightmost touch region of the menu operation hotspot; and when the input setting complies with the right-hand operation habit, then the menu item having the lowest usage priority of the predetermined number of menu items is disposed on the leftmost touch region of the menu operation hotspot.

6. The disposing method of claim 3 or 4, wherein the usage priorities are determined by usage frequencies of the menu items within a predetermined time period.

7. The disposing method of claim 5, further comprising the following steps of:
dragging a first menu item of the predetermined number of menu items in response to a dragging operation of the user on the first menu item; and
when the first menu item is at least partly overlapped with a second menu item of the predetermined number of menu items and the user stops the dragging operation, swapping the positions of the first menu item and the second menu item on the predetermined number of touch regions.

8. A menu item disposing apparatus for a mobile terminal, comprising:a touch management module, being configured to provide a menu operation hotspot at a first predetermined position on a touch screen of the mobile terminal, the menu operation hotspot having a predetermined number of touch regions;
an input module, being configured to receive an input setting that complies with left-hand operation habit or right-hand operation habit from a user;
a priority obtaining module, being configured to obtain usage priorities of menu items; and
a menu management module, being configured to dispose the predetermined number of the menu items on the predetermined number of touch regions in a descending order of the usage priorities, wherein whenthe input setting complies with the left-hand operation habit, then the menu item having the highest usage priority is disposed on the leftmost touch region of the menu operation hotspot; and when the input setting complies with the right-hand operation habit, then the menu item having the highest usage priority is disposed on the rightmost touch region of the menu operation hotspot.

9. The disposing apparatus of claim 8, wherein the touch management module is further configured to provide a menu operation dead zone at a second predetermined position adjacent to the first predetermined position to prevent false operations of the user.

10. The disposing apparatus of claim 8 or 9, wherein the menu management module is configured to: when the input setting complies with the left-hand operation habit, dispose the menu item having the lowest usage priority of the predetermined number of menu items on the rightmost touch region of the menu operation hotspot, and when the input setting complies with the right-hand operation habit, dispose the menu item having the lowest usage priority of the predetermined number of menu items on the leftmost touch region of the menu operation hotspot.

11. The disposing apparatus of claim 10, further comprising a touch responding module, wherein:
the touch management module is further configured to drag a first menu item of the predetermined number of menu items in response to a dragging operation of the user on the first menu item; and
the touch responding module is configured to, when the first menu item is at least partly overlapped with a second menu item of the predetermined number of menu items and the user stops the dragging operation, swap the positions of the first menu item and the second menu item on the predetermined number of touch regions.

12. A mobile terminal, comprising the disposing apparatus of any of claim 8 to claim 11.
